**Europäisches Patentamt**

**European Patent Office**

**Office européen des brevets**

(11) Veröffentlichungsnummer: **0 066 639**
**B1**

(12) **EUROPÄISCHE PATENTSCHRIFT**

(45) Veröffentlichungstag der Patentschrift:
**29.01.86**

(51) Int. Cl.⁴: **H 02 H 7/122,** H 03 K 17/08, H 02 M 7/515

(21) Anmeldenummer: **81104387.6**

(22) Anmeldetag: **06.06.81**

(54) Schutzbeschaltung von Thyristoren eines Wechselrichters in Schienenfahrzeugen.

(43) Veröffentlichungstag der Anmeldung:
**15.12.82 Patentblatt 82/50**

(45) Bekanntmachung des Hinweises auf die Patenterteilung:
**29.01.86 Patentblatt 86/5**

(84) Benannte Vertragsstaaten:
**AT BE CH DE FR IT LI LU NL**

(56) Entgegenhaltungen:
**EP - A - 0 024 448**
**DE - A - 2 449 548**
**FR - A - 2 292 606**

(73) Patentinhaber: **Fried. Krupp Gesellschaft mit beschränkter Haftung, Altendorfer Strasse 103, D-4300 Essen 1 (DE)**

(72) Erfinder: **Seeger, Herbert, Langeoogweg 1, D-4300 Essen 1 (DE)**

## Beschreibung

Die Erfindung bezieht sich auf eine Einrichtung zur Energieversorgung von Nutzverbrauchern in einem Eisenbahnfahrzeug aus Bahnnetzen, die Wechsel- oder Gleichspannung unterschiedlicher Höhe führen, mit einem statischen Wechselrichter, der einen Wechselrichtertransformator und Thyristoren aufweist und dem ein Gleichrichtergerät vorgeschaltet ist, wobei jeder Thyristor des Wechselrichters mit einer Sperrspannungsüberspannungsschutzbeschaltung (CR-R-Glied) ausgerüstet ist und dem Wechselrichter ein Schliesser eines Schützes vorgeschaltet ist.

Es ist beispielsweise aus «Thyristoren» von K. Heumann, C. Stumpe, erschienen im Verlag Teubner, Stuttgart, 3. Auflage, 1974, Seiten 41, 47, 272, hier Fig. 41.1, 47.1, 272.1, bekannt, zur Sperrspannungsbegrenzung von Thyristoren eines Wechselrichters diese mit jeweils einem CR-R-Glied auszustatten und dem Wechselrichter ein Filter, bestehend aus einer Spule und einem Kondensator, vorzuschalten.

Bei einer solchen Schutzbeschaltung muss damit gerechnet werden, dass bei mehreren schnell aufeinanderfolgenden Netzspannungsspitzen die netzbedingte Sperrspannung an den Thyristoren sehr stark ansteigt, wodurch die Thyristoren – wenn sie nicht überdimensioniert sind – zerstört werden. Wenn dem Wechselrichter dagegen eine Sicherung als Überspannungsschutz vorgeschaltet ist, so müsste diese Sicherung oft ausgewechselt werden.

Hier will die Erfindung Abhilfe schaffen. Die Erfindung, wie sie in dem Anspruch 1 gekennzeichnet ist, löst die Aufgabe, eine Schutzbeschaltung für Thyristoren eines Wechselrichters zu schaffen, bei der die Thyristoren nur für den Nennbetrieb ausgelegt zu werden brauchen. Dazu sind parallel zur Sperrspannungsüberspannungsschutzbeschaltung (CR-R-Glied) ein Widerstand und eine Entkopplungs-Sperrdiode in Reihe geschaltet, wobei die Anode der Entkopplungssperrdiode mit der Kathode des Thyristors verbunden ist, und das Steuergitter des Thyristors über eine Kippdiode mit der Kathode der Entkopplungs-Sperrdiode verbunden. Die Kippdiode ist in Kipprichtung zum Steuergitter des Thyristors angeordnet, und dem Schütz ist ein Spannungsmesswertgeber vorgeschaltet, der die Sekundärspannung des Wechselrichtertransformators ermittelt und bei einem sekundärseitigen Spannungseinbruch bzw. Spannungszusammenbruch das Schütz abschaltet, wodurch der Wechselrichter vom Bahnnetz getrennt wird.

Die durch die Erfindung erreichten Vorteile sind im wesentlichen darin zu sehen, dass die netzbedingte Sperrspannung begrenzt wird, wodurch die Thyristoren nicht überdimensioniert zu werden brauchen. Ausserdem würde die dem Wechselrichter vorgeschaltete Sicherung bei Überspannung nicht ausgelöst werden.

Nach Anspruch 2 wird erreicht, dass nur ein einfach aufgebauter Spannungsmesswertgeber eingesetzt zu werden braucht.

Nach Anspruch 3 wird der Anlaufstrom des Wechselrichters begrenzt, wodurch die Thyristoren auch nur für den Nennbetrieb ausgelegt zu werden brauchen.

Nach Anspruch 4 wird erreicht, dass der Wechselrichter nach einem sekundärseitigen Kurzschluss des Wechselrichtertransformators wieder in Betrieb genommen werden kann, wobei die Nennstromstärke der Thyristoren nicht überschritten wird.

Ein Ausführungsbeispiel der Erfindung ist in der Zeichnung dargestellt und wird im folgenden näher beschrieben. Es zeigen:

Fig. 1 ein Schaltbild einer Energieversorgungseinrichtung mit einem Wechselrichter,

Fig. 2 das Schaltbild des Wechselrichters während eines Kommutierungsvorganges und

Fig. 3 das Schaltbild des Wechselrichters bei einem Netzspannungsstoss.

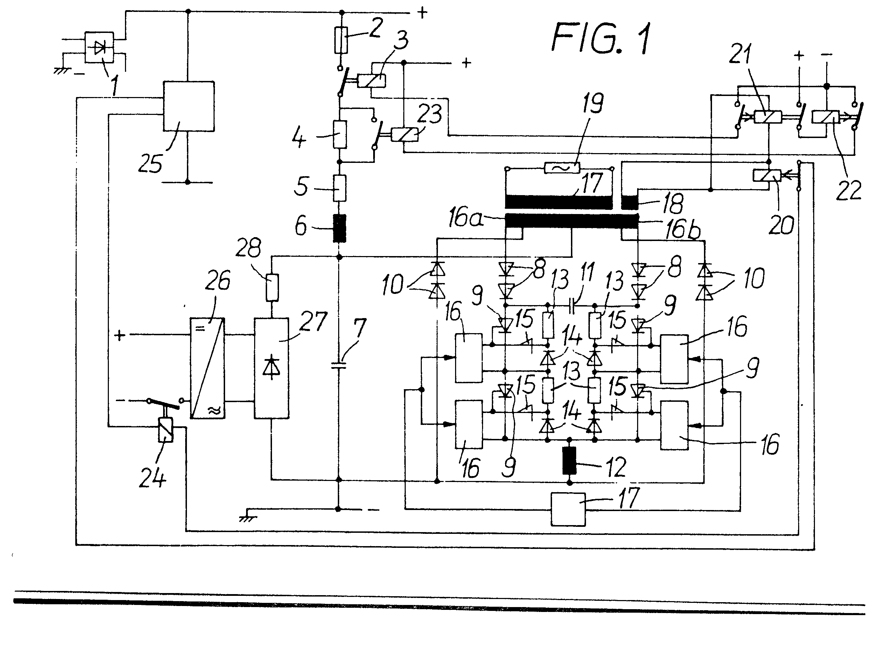

Gemäss Fig. 1 weist die Energieversorgungseinrichtung eingangsseitig ein Gleichrichtergerät 1 auf. Diesem Gleichrichtergerät 1 ist eine Sicherung 2, der Sicherung 2 ein Schliesser eines Schützes 3, dem Schliesser ein Anlaufwiderstand 4, dem Anlaufwiderstand 4 ein Strombegrenzungswiderstand 5, dem Strombegrenzungswiderstand 5 eine Dämpfungsdrossel 6 und diesem ein Dämpfungs- bzw. Energiespeicherkondensator 7 nachgeschaltet. An dem Kondensator 7 ist der Wechselrichter in Mittelpunktschaltung angeschlossen. Dieser Wechselrichter weist zwei Reihen von Sperrdioden 8, zwei Reihen von Thyristoren 9 und zwei Reihen von Freilaufdioden 10 sowie einen Kommutierungskondensator 11 und eine Kommutierungsdrossel 12 auf. Jedem der vier Thyristoren 9 des Wechselrichters ist in Reihenschaltung ein Widerstand 13 und eine Entkopplungs-Sperrdiode 14 parallel geschaltet. Das eine Ende eines jeden Widerstandes 13 ist mit der Anode des entsprechenden Thyristors 9, und die jeweilige Anode der Entkopplungs-Sperrdiode 14 ist mit der Kathode des entsprechenden Thyristors 9 verbunden. An den Kathoden der Entkopplungs-Sperrdioden 14 ist jeweils eine Kippdiode 15 in Kipprichtung angeschlossen. Das jeweilige andere Ende der Kippdioden 15 ist an dem Steuergitter der entsprechenden Thyristoren 9 angeschlossen. Die Thyristoren stehen ansteuermässig auch mit jeweils einem Impulsgebergerät 16 in Verbindung. Diese Impulsgebergeräte 16 werden von einem Steuergerät 17 angesteuert. Der Wechselrichtertransformator weist eine Primärwicklung 16a, 16b mit einer Mittelpunktanzapfung auf. Die Mittelpunktanzapfung des Wechselrichtertransformators ist mit der Dämpfungsdrossel 6 verbunden. An den Wicklungsenden der Primärwicklung 16a, 16b sind die jeweiligen Sperrdioden 8 angeschlossen. Ausserdem weist der Wechselrichtertransformator zwei Sekundärwicklungen 17, 18 auf. An einer der vorgenannten Wicklungen 17 sind Nutzverbraucher 19 und an der anderen Wicklung 18 sind ein Schwellspannungszeitrelais 20 und ein Zeitrelais 21 angeschlossen.

Das Zeitrelais 21 weist zwei Schliesser auf; wobei einer der Schliesser beim Ausschaltvorgang zeitverzögert öffnet. An dem zeitverzögerten Schliesser ist das Schütz 3 und an dem nichtzeitverzögerten Schliesser ist ein Relais 22 angeschlossen. Dieses Relais 22 weist einen Schliesser auf, der beim Einschaltvorgang zeitverzögert geschlossen wird. An diesem Schliesser ist ein Anlaufwiderstandsüberbrückungsschütz 23 angeschlossen.

Das Schwellspannungszeitrelais 20 weist einen Öffner auf, der beim Öffnungsvorgang zeitverzögert geöffnet wird. An diesem Öffner ist ein Hilfsschütz 24 und dieses Hilfsschütz 24 ist an einer Spannungserfassungs-Spannungsquellen-Einheit 25 angeschlossen. Das Hilfsschütz 24 weist einen Schliesser auf. Diesem Schliesser ist die Bordbatterie vorgeschaltet und ein Hilfswechselrichter 26 nachgeschaltet. Diesem Hilfswechselrichter 26 ist eine Gleichrichterbrücke 27 nachgeschaltet, die ausgangsseitig über einen Strombegrenzungswiderstand 28 mit dem Eingang des Wechselrichters verbunden ist.

Inbetriebnahme des Wechselrichters:

Liegt Netzspannung an, so wird das Hilfsschütz 24 über die Spannungserfassungs-Spannungsquellen-Einheit 25 und dem Öffner des Schwellspannungszeitrelais 20 mit Spannung versorgt, und der Schliesser des Hilfsschützes 24 wird geschlossen. Der Wechselrichter wird mit einer Hilfsspannung aus der Bordbatterie versorgt und fängt an zu arbeiten. Nach kurzer Zeit gibt die Sekundärwicklung 18 eine Spannung in einer bestimmten Höhe ab, und das Schwellspannungszeitrelais 20 und das Zeitrelais 21 werden mit Spannung beaufschlagt. Dadurch werden beide Relais 20, 21 in Betrieb genommen. Das Zeitrelais 21 schliesst seinen Schliesser, das Schütz 3 wird mit Spannung versorgt und schliesst seinen Schliesser. Der Wechselrichter wird nun über den Anlaufwiderstand mit Spannung versorgt, die grösser ist als die Hilfsspannung. Da das Schwellspannungszeitrelais 20 seinen Öffner zeitverzögert öffnet, wird die Bordbatterie durch das Hilfsschütz auch zeitverzögert vom Wechselrichter getrennt. Durch das Zeitrelais 21 wird auch gleichzeitig mit dem Schütz 3 das Relais 22 mit Spannung beaufschlagt. Dieses Relais 22 schliesst seinen Schliesser zeitverzögert. Schliesst der letztgenannte Schliesser, so wird das Anlaufwiderstandsüberbrückungsschütz 23 mit Spannung beaufschlagt und schliesst den Anlaufwiderstand kurz. Der Wechselrichteranlauf ist damit beendet.

Es werden nun unterschiedliche Störfälle behandelt:

Störfall 1

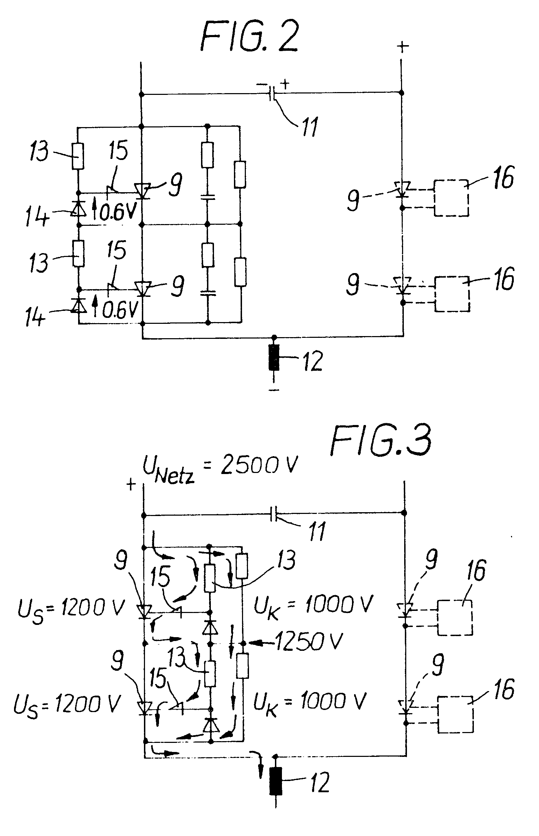

Es wird nun angenommen, dass die Netzspannung eine Spannungshöhe besitzen würde, wodurch die augenblicklich nicht leitenden Thyristoren in positiver Sperrspannungsrichtung zerstört werden würden. Dies ist in Fig. 3 dargestellt. Es wird angenommen, dass jeder der beiden Thyristoren 9 eine Sperrspannung von 1200 V aufweisen; die Netzspannung betrage 2500 V. An jedem Thyristor 9 würde also eine Spannung von 1250 V abfallen, die zur Zerstörung dieser Thyristoren führen würde. Da die beiden Kippdioden 15 jeweils eine Kippspannung von jeweils 1000 V aufweisen, werden diese beiden Kippdioden 15, wenn die Netzspannung eine Spannungshöhe von 2000 V erreicht, in den Leitzustand übergehen. Dadurch werden die beiden z.Z. nicht leitenden Thyristoren 9 gezündet und gehen in den Leitzustand über. Da sich nun alle Thyristoren 9 im Leitzustand befinden, liefert die Sekundärwicklung 18 des Wechselrichtertransformators keine Spannung mehr. Dadurch werden das Schwellspannungszeitrelais 20 und das Zeitrelais 21 stromlos. Der Wechselrichtereingangsstrom wird durch den Begrenzungswiderstand 5 so begrenzt, dass der maximale Thyristorstrom für jeden Thyristor 9 nicht überschritten wird. Der nicht zeitverzögerte Schliesser des Zeitrelais 21 öffnet, und das Relais 22 wird stromlos. Dadurch wird das Anlaufwiderstandsüberbrückungsschütz 23 stromlos, und der Anlaufwiderstand 4 wird wirksam. Bleibt die Netzspannung weiter auf diesem hohen Wert, so werden die in Fig. 1 rechts dargestellten Thyristoren 9 zunächst mittels des Kommutierungskondensators 16 gesperrt und sofort durch ihre zugehörigen Sperrdioden 15 wieder gezündet. Es stellt sich ein Kurzschlussstrom ein, und das Schütz 3 schaltet – da nun der zeitverzögerte Schliesser des Zeitrelais geöffnet wurde – den Wechselrichter vom Netz ab. Der Wechselrichter wird danach – wie weiter oben beschrieben – wieder in Betrieb genommen.

Geht dagegen – wenn der Anlaufwiderstand im Einsatz ist – die Netzspannung zurück (Netzspannung kleiner als zweimal Sperrspannung), so gehen die in Fig. 1 rechts dargestellten Thyristoren 9 in den Sperrzustand und der Wechselrichter in den normalen Betriebszustand über. Die Sekundärwicklung 18 des Wechselrichtertransformators gibt wieder eine Spannung ab. Dadurch wird das Zeitrelais 21 wieder mit Spannung beaufschlagt, und der Anlaufwiderstand 4 wird wieder zeitverzögert kurzgeschlossen.

Störfall 2

Es wird nun angenommen, dass auf der Sekundärseite des Wechselrichtertransformators ein Kurzschluss entstehen würde und dass die in Fig. 1 rechts dargestellten Thyristoren 9 sich im Leitzustand befinden. Durch den Kurzschluss würde sich in einer Teilwicklung 16b der Primärwicklung des Wechselrichtertransformators eine grosse Stromänderung einstellen ($\frac{di}{dt}$). Diese Stromänderung bewirkt, dass sich in der anderen Teilwicklung 16a der Primärwicklung des Wechselrichtertransformators eine hohe Induktionsspannung einstellen würde ($w \cdot \frac{di}{dt}$). Diese hohe Spannung würde an den sich nicht im Leitzustand befinden den Thyristoren 9 (in Fig. 1 links dargestellte Thyristoren) anfallen und die Thyristoren zerstören (positive Sperrspannung). Die Kippdioden 15 sorgen auch in diesem Fall dafür, dass die in Fig. 1 links dargestellten Thyristoren 9 gezündet werden und dass der Wechselrichter entweder abgeschaltet oder bei kurzzeitigem Kurzschluss nur vorübergehend ausser Betrieb gesetzt wird.

Störfall 3

Es wird nun angenommen, dass durch einen Störimpuls ein augenblicklich nicht leitender Thyristor 9 gezündet wird und die Netzspannung eine Spannungshöhe von 1500 V aufweise. In diesem Fall würde, wenn die Kippdiode 15 nicht vorhanden wäre, an dem sich nicht im Leitzustand befindenden Thyristor 9 die volle Spannung von 1500 V anfallen und den Thyristor zerstören. Durch die zugehörige Kippdiode 15 wird aber – wenn die Spannung am Thyristor 9 1000 V überschreitet – der Thyristor 9 gezündet. Dadurch stellt sich wiederum ein kurzzeitiger Kurzschluss ein, wodurch der Wechselrichter nur vorübergehend ausser Betrieb gesetzt oder abgeschaltet wird.

Störfall 4

Es wird nun angenommen, dass ein Thyristor 9 durch Zündverzug nicht angesteuert wird. Dadurch würde an dem anderen dazu in Reihe geschalteten Thyristor 9 eine zu hohe Spannung anfallen. Auch in diesem Fall wird der letztgenannte Thyristor 9 durch seine zugehörige Kippdiode angesteuert.

In Fig. 2 ist dargestellt, dass die Steuergitter der Thyristoren 9 – die in den Sperrbereich gehen sollen – mit negativer Vorspannung – 0,6 V – gegenüber der Kathode der Thyristoren 9 beaufschlagt werden. Dadurch wird das dynamische Verhalten der Thyristoren 9 (Sperrichtungszeitverhalten) positiv beeinflusst.

**Patentansprüche**

1. Einrichtung zur Energieversorgung von Nutzverbrauchern (19) in einem Eisenbahrzeug aus Bahnnetzen, die Wechsel- oder Gleichspannung unterschiedlicher Höhe führen, mit einem statischen Wechselrichter, der einen Wechselrichtertransformator und Thyristoren (9) aufweist und dem ein Gleichrichtergerät (1) vorgeschaltet ist, wobei jeder Thyristor (9) des Wechselrichters mit einer Sperrspannungsüberspannungsschutzbeschaltung (CR-R-Glied) ausgerüstet und dem Wechselrichter ein Schliesser eines Schützes (3) vorgeschaltet ist, dadurch gekennzeichnet, dass parallel zur Sperrspannungsüberspannungsschutzbeschaltung in Reihenschaltung ein Widerstand (13) und eine Entkopplungs-Sperrdiode (14) geschaltet ist, wobei die Anode der Entkopplungs-Sperrdiode (14) mit der Kathode des Thyristors (9) verbunden ist, dass das Steuergitter des Thyristors (9) über eine Kippdiode (15) mit der Kathode der Entkopplungs-Sperrdiode (14) verbunden ist, wobei die Kippdiode (15) in Kipprichtung zum Steuergitter des Thyristors (9) angeordnet ist, und dass dem Schütz (3) ein Spannungsmesswertgeber (21) vorgeschaltet ist, der die Sekundärspannung des Wechselrichtertransformators ermittelt und bei einem sekundärseitigen Spannungseinbruch bzw. Spannungszusammenbruch das Schütz (3) abschaltet, wodurch der Wechselrichter vom Bahnnetz getrennt wird.

2. Energieversorgungseinrichtung nach Anspruch 1, dadurch gekennzeichnet, dass der Spannungsmesswertgeber ein Zeitrelais (21) mit einem Schliesser aufweist, wobei die Spule des Zeitrelais (21) mit einer Sekundärwicklung (18) des Wechselrichtertransformators verbunden ist, dass der Schliesser dieses Zeitrelais (21) der Spule des Schützes (3) vorgeschaltet ist, und dass der Schliesser des Zeitrelais (21) zeitverzögert öffnet.

3. Energieversorgungseinrichtung nach Anspruch 2, dadurch gekennzeichnet, dass dem Wechselrichter ein Anlaufwiderstand (4) und ein Anlaufüberbrückungsschütz (23) und dass der Spule des Anlaufüberbrückungsschützes (23) ein Schliesser eines Relais (22) vorgeschaltet ist, wobei dieser Schliesser zeitverzögert schliesst und die Spule des Relais (22) an einem nicht zeitverzögerten Schliesser des Zeitrelais (21) angeschlossen ist.

4. Energieversorgungseinrichtung nach Anspruch 1, dadurch gekennzeichnet, dass am Eingang des Wechselrichters eine Gleichrichterbrücke (27) angeschlossen ist, der ein Hilfswechselrichter (26), ein Schliesser eines Hilfsschützes (24) und eine Bordbatterie vorgeschaltet ist, und dass die Spule des Hilfsschützes (24) einerseits mit einer Spannungserfassungs-Spannungsquellen-Einheit (25) und andererseits mit einem Öffner eines Schwellspannungszeitrelais (20) verbunden ist, wobei dieser Öffner zeitverzögert öffnet und die Spule des Schwellspannungszeitrelais (20) an einer Sekundärwicklung (18) des Wechselrichtertransformators angeschlossen ist.

**Claims**

1. Device to supply power to consumers (19) in a railway vehicle from contact systems carrying different ac or dc system voltages, comprising a static inverter which features an inverter transformer and thyristors (9) and which is preceded by a rectifier (1), each thyristor (9) of the inverter being equipped with an inverse voltage overvoltage protection circuit (CR-R element) and the inverter being preceded by a make contact of a contactor (3) characterized in that parallel to the inverse voltage overvoltage protection circuit a resistor (13) and a decoupling cutoff diode (14) are series connected, the anode of the decoupling cutoff diode (14) being connected to the cathode of the thyristor (9), that the control grid of the thyristor (9) is connected via a sweep diode (15) with the cathode of the decoupling cutoff diode (14), said sweep diode (15) being arranged in sweep direction towards the control grid of the thyristor (9), and that the contactor (3) is preceded by a voltage transducer (21), which determines the secondary voltage of the inverter transformer and in case of secondary voltage dip or collapse deenergizes the contactor (3), thereby disconnecting the inverter from the contact system.

2. Power supply device according to Claim 1, characterized in that the voltage transducer has a time-lag relay (21) with a make contact, the coil of the time-lag relay (21) being connnected with a secondary winding (18) of the inverter transformer, that the make contact of this time-lag relay (21) precedes the coil of the contactor (3), and that the make contact of the time-lag relay (21) opens with a delay.

3. Power supply device according to Claim 2, characterized in that the inverter is preceded by a starting resistor (4) and a bridging contactor (23) and that the coil of the bridging contactor (23) is preceded by a make contact of a relay (22), said make contact closing with a delay and the coil of the relay (22) being connected to a make contact of the time-lag relay (21) operating without a delay.

4. Power supply device according to Claim 1, characterized in that connected to the inverter input is a rectifier bridge (27) which is preceded by an auxiliary inverter (26), a make contact of an interlock (24) and a storage battery, and that the coil of the interlock (24) is connected on the one hand with a voltage collection-voltage source unit (25) and on the other hand with a break contact of a threshold voltage time-lag relay (20), this break contact opening with a delay and the coil of the threshold voltage time-lag relay (20) being connected to a secondary winding (18) of the inverter transformer.


**Revendications**

1. Installation d'alimentation en énergie d'appareils de consommation (19) dans un véhicule ferroviaire à partir de réseaux de voies ferrées qui conduisent une tension alternative ou continue de valeur variable, qui comprend un onduleur statique comportant un transformateur d'onduleur et des thyristors (9) et monté à la suite d'un appareil redresseur (1), chacun des thyristors (9) de l'onduleur étant équipé d'un circuit de protection contre la surtension de tension d'arrêt (organe CR-R) et un dispositif de fermeture d'un relais (3) étant monté avant l'onduleur, caractérisée en ce qu'elle comprend, parallèlement au circuit de protection contre une surtension de tension d'arrêt, une résistance (13) et une diode d'arrêt de découplage (14) montées en série, l'anode de la diode d'arrêt de découplage (14) étant reliée à la cathode du thyristor (9) et la grille de commande du thyristor (9) étant reliée, par l'intermédiaire d'une diode à bascule (15), à la cathode de la diode d'arrêt de découplage (14), la diode à bascule (15) étant placée vers la grille de commande du thyristor (9) dans le sens du basculement et le relais (3) étant monté à la suite d'un appareil (21) de mesure de la tension qui détermine la tension secondaire du transformateur de l'onduleur et, en cas de poussée ou d'affaissement de la tension, déclenche le relais (3), de sorte que l'onduleur se trouve séparé du réseau de voies ferrées.

2. Installation d'alimentation en énergie selon la revendication 1, caractérisée en ce que l'appareil de mesure de la tension comporte un relais temporisé (21) muni d'un dispositif de fermeture, la bobine du relais temporisé (21) étant reliée à un enroulement secondaire (18) du transformateur d'onduleur, en ce que le dispositif de fermeture de ce relais temporisé (21) est monté en avant de la bobine du relais (3) et en ce que le dispositif de fermeture du relais temporisé (21) s'ouvre avec un certain retard.

3. Installation d'alimentation en énergie selon la revendication 2, caractérisée en ce qu'une résistance de démarrage (4) et une relais (23) fonctionnant pour le démarrage sont montés avant l'onduleur et en ce que le dispositif de fermeture d'un relais (22) est monté avant la bobine du relais (23) fonctionnant pour le démarrage, ce dispositif de fermeture se fermant avec un certain retard et la bobine du relais (22) étant reliée à un dispositif de fermeture sans retard du relais temporisé (21).

4. Installation d'alimentation en énergie selon la revendication 1, caractérisée en ce qu'un onduleur auxiliaire (26), un dispositif de fermeture d'un relais auxiliaire (24) et une batterie de bord sont montés à l'entrée de l'onduleur reliée à un pont redresseur (27) qui est monté à la suite et en ce que la bobine du relais auxiliaire (24) est reliée d'une part à une unité (25) de production et de récupération d'énergie et d'autre part avec un dispositif d'ouverture d'un relais temporisé (20) à tension de seuil, ce dispositif d'ouverture s'ouvrant avec un certain retard et la bobine du relais temporisé (20) à tension de seuil étant reliée à un enroulement secondaire (18) du transformateur de l'onduleur.

FIG. 1

## FIG. 2

## FIG.3